# EUROPEAN PATENT APPLICATION

(11) **EP 3 747 736 A1**
(43) Date of publication of application: **09.12.2020**
(21) Application number: 19179009.6
(22) Date of filing: 07.06.2019
(51) Int. Cl.: B62D 21/15, B62D 25/02, B62D 29/00, F16F 7/12, F16F 7/00, B60R 21/04

(54) **ENERGY ABSORBING DEVICES AND METHODS OF MAKING AND USING THE SAME**

(71) Applicant: SABIC Global Technologies B.V., 4612 PX Bergen op Zoom (NL)
(72) Inventor: Godthi, Vamsy, 562125 Bangalore, Karnataka (IN); Bobba Venkat, Somasekhar, 562125 Bangalore, Karnataka (IN); Sharma, Harindranath K., 562125 Bangalore, Karnataka (IN); Parameshwara, Arunachala, 562125 Bangalore, Karnataka (IN); Munjurulimana, Dinesh, Wixom, MI Michigan 48393 (US)
(74) Representative: Modiano, Micaela Nadia

(57) **Abstract**

An energy absorbing device includes a composite or metallic component having greater than or equal to three walls forming a component channel with a longitudinal length and a polymeric component. The polymeric component has a honeycomb structure with two or more walls defining honeycomb tubes and supported within the component channel with the honeycomb tubes stacked transversely along the longitudinal length of the component channel. Ends of the honeycomb tubes abut the composite or metal component. The composite or metal component, or the polymeric component, has a bending stiffness greater than a bending stiffness of the honeycomb structure. Rocker assemblies and vehicle bodies are also described.

## Description

### BACKGROUND

The present disclosure relates generally to energy absorbing devices for use in vehicle bodies, for example, to absorb energy during a side impact to a vehicle body.

Vehicles, such as automobiles, commonly include vehicle bodies constructed from structural members like rails, posts, and rockers. Rockers generally extend longitudinally along the length of the vehicle between the front and rear wheels of the vehicle, typically at the lateral edges of the vehicle body and below the door rings of the vehicle body. Because of their location in the vehicle body, rockers contribute to the protection provided by the vehicle body to vehicle occupants and certain vehicle components during a crash. For example, in electric and hybrid-electric vehicles having batteries carried below the floor of the vehicle body, rockers resist intrusion into the vehicle battery compartment during side impact according to the bending stiffness of the rocker structure. For that reason rockers are typically formed from metallic material having high strength, such as steel. Side pole impact testing, such as the NCAP side impact rigid pole test and IIHS side impact test, generally demonstrate that such rockers can provide adequate protection vehicle occupants and components in the event of a side impact.

Among the challenges to rocker construction are the tradeoff between bending stiffness and weight in material selection as well as limited space typically available within the rocker for packaging energy absorbing elements. With respect to material selection, high strength metals like steel are generally heavy in comparison to lower strength materials, such as aluminum and plastics. Therefore, weight reduction, e.g., through material substation or construction changes like gauge reduction, while beneficially improving the efficiency of a vehicle, can also reduce the strength the certain vehicle bodies, potentially reducing the protection afforded by the rockers to the vehicle occupants and/or vehicle components. With respect to packaging, energy absorbing elements typically compete with structural elements for space within the rocker. Automakers therefore continue to seek ways to remove weight from structures like rockers without reducing the safety provided by existing rocker designs.

Such conventional systems and methods have generally been acceptable for their intended purpose. However, there remains a need in the art for improved energy absorbing devices, rocker assemblies, and vehicle bodies as well as for methods of making and using energy absorbing devices, rocker assemblies, and vehicle body. The present disclosure provides a solution to this need.

### BRIEF DESCRIPTION

Disclosed, in various implementations, are energy absorbing devices that can be used in conjunction with various vehicle components.

In an implementation an energy absorbing device is provided. An energy absorbing device includes a composite or metallic component having greater than or equal to three walls forming a component channel with a longitudinal length, and a polymeric component having a honeycomb structure with a plurality of polymeric walls, the plurality of polymeric walls defining honeycomb tubes. The polymeric component is supported within the component channel with the honeycomb tubes stacked transversely along the longitudinal length of the component channel, ends of the honeycomb tubes opposing the composite or metal component. The composite or metal component, or the polymeric component, has a bending stiffness greater than a bending stiffness of the honeycomb structure to provide back support for progressive crushing of the honeycomb tubes during a side pole impact to a vehicle.

In another implementation a rocker assembly is provided. A rocker assembly includes a sill having a sill bending stiffness, a facia connected to the sill and defining therebetween a rocker cavity, and an energy absorbing device as in the preceding implementations supported within the rocker cavity and abutting the sill.

In an implementation a vehicle body is provided. The vehicle body includes a rocker assembly having a sill with a sill bending stiffness and an energy absorbing device according to preceding implementation abutting the sill. The rocker assembly is arranged laterally outboard of a protected space located within the vehicle body. A battery is arranged within the protected space, a drive train with a motor is in electrical communication with the battery. The sill bending stiffness is less than a bending stiffness required for crushing the honeycomb structure against the sill..

These and other non-limiting characteristics are more particularly described below.

### BRIEF DESCRIPTION OF THE DRAWINGS

The following is a brief description of the drawings wherein like elements are numbered alike and which are presented for the purposes of illustrating the implementations disclosed herein and not for the purposes of limiting the same.
FIG. 1 is a side view of a vehicle including an energy absorbing device constructed in accordance with the present disclosure, showing a rocker assembly housing the energy absorbing device to absorb energy from a side impact to the vehicle;
FIG. 2 schematic view of the vehicle of FIG. 1, showing the rocker assembly arranged laterally outboard of a battery undergoing a side pole impact and limiting intrusion into a protected space housing the battery;
FIGS. 3 and 4 are perspective and cross-sectional views of the energy absorbing device of FIG. 1 according to an implementation, showing a composite or metallic component and polymeric components of the energy absorbing device, respectively;
FIGS. 5-8 are cross-sectional views of the composite or metallic component of FIG. 3, showing profiles defined by walls of the composite or metal component, respectively;
FIGS. 9-14 are plan and perspective views of part-to-part interlocks of fixing the polymeric components to one another in the energy absorbing device of FIGS. 3 and 4, showing a dovetail member, a half-hexagon member, a semi-circle member, a snap member, and a clip member, respectively;
FIGS. 14 and 15 are perspective and cross-sectional views of the energy absorbing device of FIG. 1 according to implementations, showing composite or metal components connected to a honeycomb structure by a double-wall tub, respectively;
FIGS. 17 and 18 are perspective views of the energy absorbing device of FIG. 1 according to a further implementation, showing a polymeric component co-molded to a composite or metallic component having a w-shaped profile, respectively;
FIGS. 19-21 are end views of the composite or metallic component of FIG. 17 according to implementations, showing additional profiles into which the polymeric component may be co-molded, respectively;
FIG. 22 is perspective view of the energy absorbing device of FIG. 1 according to yet another implementation, showing the polymeric component clipped to the composite of metal component;
FIGS. 23 and 24 are a perspective and cross-sectional views of the energy absorbing device of FIG. 1 according to further implementations, showing a discontinuous composite or metallic component and an energy absorbing device having a polymeric component slidably received within the component channel, respectively.

### DETAILED DESCRIPTION

Disclosed herein, in various implementations, are energy absorbing devices which can be used in conjunction with vehicle body, e.g., to absorb energy during an impact and limit intrusion into a protected space within a vehicle body. The energy absorbing devices can comprise a composite or metallic component and a polymeric component (e.g., thermoplastic), which can be manufactured utilizing various co-molding processes, and assembled together to a unitary energy absorbing device of length sufficient for use in a rocker assembly of the vehicle body. The polymeric component provides the energy absorption signature required for the vehicle body, e.g., to comply with so-called "side pole impact" certification tests, keeps intrusion as well as acceleration and forces within predetermined limits during an impact, and limits weight of the vehicle. The composite or metallic component provides bending stiffness and back support to the polymeric component, enabling impact energy absorption through crushing of the polymeric component during an impact. As used herein the term "bending stiffness" refers to resistance of a beam-like structure, e.g., the polymeric component and/or the composite or metal component, to deformation in response to external load applied perpendicularly to a longitudinal axis of the structure.

Attempts have been made to provide metallic energy absorbing inserts for automotive vehicles, which absorb a major portion of impact energy during a crash. Metallic energy absorbing inserts, however, while having good energy absorption characteristics can be relatively heavy in relation to polymeric honeycomb structures. Polymeric honeycomb structures, while relatively lightweight, can be difficult to fabricate in the lengths typically required for vehicle bodies that are long, such as vehicle floor rocker assemblies. Polymeric honeycomb structures can also lack sufficient bending stiffness where rear support (i.e., in the direction of crushing) is insufficient to provide bending stiffness required for the polymeric honeycomb structure to crush and absorb the energy associated with the impact. Further, the packing space allocated within structures such as rockers can present challenges with respect to the alignment of part production requirements and assembly processes, e.g., the ability of the polymeric material forming the honeycomb structure to retain dimensional stability and mechanical properties after exposure to temperatures of up 200°C during electrostatic coating of the vehicle body.

The present application solves one or more of these problems with a hybrid energy absorbing device including a composite or metallic component to provide bending stiffness where rear (i.e. crush direction) support is not available from the vehicle body for a honeycomb structure of a polymeric component fixed to the composite or metallic component to crush. The composite or metallic component can comprise greater than or equal to three walls (e.g., an open or closed structure). The open structure has three walls that form a channel with at least three open sides (e.g., two opposing walls and a connecting wall), while a closed structure has greater than or equal to four walls (comprising two sets of opposing walls that connect to form less than or equal to two open walls).

The honeycomb structure of the polymeric component has walls defining honeycomb tubes that abut the composite or metal component, are stacked transversely with one another along the longitudinal length of the composite or metal structure, and which crush between composite or metallic component and the object exerting the impact force. The honeycomb tubes of the honeycomb structure define channels that can be oriented, for example, substantially parallel or perpendicular to one or more of the composite or metallic component profile segments.

Characteristics of the energy absorbing device include high toughness/ductility, thermal stability, high energy absorption capacity, a good modulus-to-elongation ratio, and recyclability, among others, wherein "high" and "good" are intended to mean that the characteristic at least meets vehicle safety regulations and requirements for the given component/element. The composite or metallic component can comprise any composite or any metal(s) or metal alloy(es) having the desired characteristics, e.g., structural integrity, bending stiffness, and so forth. Some possible composite component materials include formed composites, e.g., UD/Woven composites, and molded composites, e.g., GTX830 or GTX 840. Some possible metal component material(s) include formed aluminum, steel, titanium, chrome, magnesium, zinc, steels as well as combinations comprising at least one of the foregoing materials.

The polymeric component can comprise any thermoplastic material or combination of thermoplastic materials that can be formed into the desired shape and provide the desired properties, and may be filled or unfilled. Examples of suitable plastic materials include thermoplastic materials as well as combinations of thermoplastic materials with metal, elastomeric material, and/or thermoset materials. Possible thermoplastic materials include polybutylene terephthalate (PBT); acrylonitrile-butadiene-styrene (ABS); polycarbonate; polycarbonate/PBT blends; polycarbonate/ABS blends; copolycarbonate-polyesters; acrylic-styrene-acrylonitrile (ASA); acrylonitrile-(ethylene-polypropylene diamine modified)-styrene (AES); phenylene ether resins; blends of polyphenylene ether/polyamide; polyamides; phenylene sulfide resins; polyvinyl chloride PVC; high impact polystyrene (HIPS); low/high density polyethylene (L/HDPE); polypropylene (PP); expanded polypropylene (EPP); and thermoplastic olefins (TPO). For example, the plastic material can include a Noryl GTX® thermoplastic resin or a Xenoy® synthetic resin, each available from SABIC Global Technologies of Bergen op Zoom, Netherlands. The polymeric component can also be made from combinations comprising at least one of any of the above-described materials.

The overall size, e.g., the specific dimensions of the energy absorbing device will depend upon its location in the vehicle and its function. For example, the length, height, and width of the energy absorbing device, will depend upon the amount of space available in the desired location of use as well as the needed energy absorption. The depth and wall thicknesses of the composite or metallic component and the one or more polymeric component of the energy absorbing device will also depend upon the available space, desired bending stiffness, and the materials (or combination of materials) employed. In certain implementations the length energy absorbing device is greater than the both the height and the depth, e.g., on the order of ten times the depth and/or the height of the energy absorbing device.

The thickness of the walls of the composite or metallic component can all be the same or can be different to enhance bending stiffness in a desired direction. For example, one of the walls, e.g., the wall connecting two opposite walls, can have a greater/lesser thickness than the opposing walls. In some implementations, the metal walls have a thickness of less than or equal to 5 millimeters, specifically, 0.4 millimeters to 3 millimeters, and more specifically 0.5 millimeters to 1.5 millimeters. The plastic component can have a length commensurate with the length of the metal component. The thickness of the walls of the plastic component can be 0.5 millimeters to 10 millimeters, specifically, 1.2 millimeters to 5 millimeters, and more specifically 1.8 millimeters to 4 millimeters. As with the dimensions of the components, the density of combs can be such that the tube diameters can vary between 10 millimeters and 50 millimeters, and is dependent upon the desired bending stiffness, crush characteristics, and materials employed in the energy absorbing device.

The energy absorbing devices disclosed herein are arranged to absorb a significant amount of impact energy when subjected to an impact force having a transverse component while also augmenting the intrusion resistance of the vehicle rocker. This makes these energy absorbing devices useful as for both limiting vehicle weight as well as enhancing safety of other vehicle components. The energy absorbing devices disclosed herein, which can be co-molded, provide an integrated energy absorbing device to provide intrusion protection during a side impact event, e.g., a side pole impact. The energy absorbing devices disclosed herein utilize various designs of a composite or metallic component and one or more polymeric component, which can be assembled or co-molded, to absorb energy upon impact with relatively low cost, lightweight, and in certain implementations increased strength and safety. The energy absorbing device can reduce repair costs of the vehicle after impact. For example, the energy absorbing device can limit damage by absorbing the energy upon impact such that the rocker backplate and/or such that the vehicle body or batteries are not damaged as a consequence of the impact.

While shown and described herein in the context of an energy absorbing device for a rocker assembly, the energy absorbing device can be used in various locations in a vehicle body. For example, the energy absorbing device can be located behind the bumper beam and steel structure to which the bumper beam is attached, but in front of the vehicle body to serve as protection to the from damage upon the application of force caused by an impact. In other words, between vehicle body and the feature to which the bumper beam attaches. Other components which the energy absorbing device can be used to protect include: roof rails, pillars, rail extensions, and combinations of the foregoing structures.

The energy absorbing device can be produced by several processes, such as by assembling an injection molded polymeric component (or components) to the composite or metal component, or by co-molding processes to mold the composite or metallic component to the composite or metallic component to form an energy absorbing device comprising an integrated structure. The composite or metallic component can be formed, for example, by extruding or stamping into the desired shape (e.g., a rectangular open-channel like shape), assembling the polymeric component with the composite or metal component, or by co-molding the polymeric component with the composite or metallic component using, for example, an injection molding technique. The various processes and specific details of the composite or metal component, the polymeric component, and assembly of the composite or metallic component and the polymeric component will be described in more detail with respect to the figures.

A more complete understanding of the components, processes, and apparatuses disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the illustrated implementations. Although specific terms are used in the following description for the sake of clarity, these terms are intended to refer only to the particular structure of the implementations selected for illustration in the drawings, and are not intended to define or limit the scope of the disclosure. In the drawings and the following description below, it is to be understood that like numeric designations refer to components of like function.

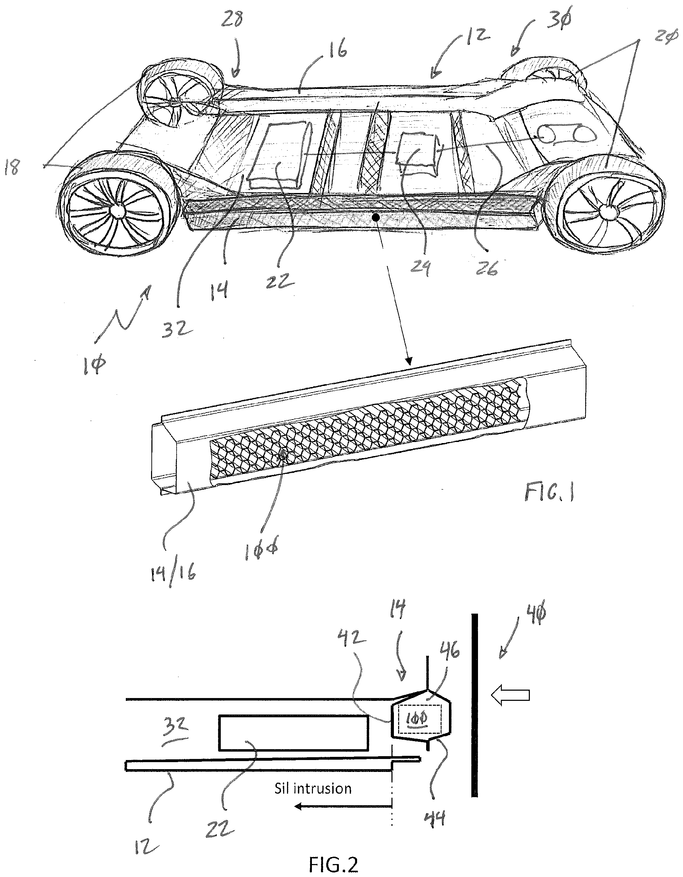

Referring to FIG. 1, a vehicle 10, e.g., a hybrid electric or an electrical vehicle is shown. The vehicle 10 includes a vehicle body 12, a driver-side rocker assembly 14, and a passenger-side rocker assembly 16. The vehicle 10 also includes front wheels 18, rear wheels 20, and a battery 22. The vehicle 10 additionally includes an electric motor 24 and a drive train 26.

The vehicle body 12 extends between a front end 28 and a rear end 30 of the vehicle 10, and includes the driver-side rocker assembly 14 and the passenger-side rocker assembly 16. The front wheels 18 are supported for rotation relative to the vehicle body 12 on the front end 28 of the vehicle 10, and the rear wheels 20 are supported for rotation relative to the vehicle body 12 on the rear end 30 of the vehicle 10. The vehicle body 12 carries the battery 22, the electric motor 24, and the drive train 26. The battery 22 is in electrical communication with the electric motor 24 to provide electric power to the electric motor 24. The electric motor 24 is connected to the rear wheels 20 by the drive train 26 for propelling the vehicle 10. The battery 22 is arranged within a protected space 32 defined between the driver-side rocker assembly 14 and the passenger-side rocker assembly 16, the driver-side rocker assembly 14 and the passenger-side rocker assembly 16 defining lateral sides of the vehicle body 12. Although a particular type of vehicle is shown in FIG. 1, e.g., an electric vehicle with rear-wheel drive, it is to be understood and appreciated that other types of vehicles can benefit from the present disclosure, such as hybrid electric vehicles and vehicles employing internal combustion engines by way of non-limiting examples.

As will be appreciated by those of skill in the art in view of the present disclosure, the driver-side rocker assembly 14 and the passenger-side rocker assembly 16 limit (or prevent entirely) intrusion into the protected space 36 in the event of a crash, e.g., during a side pole impact 40 (shown in FIG. 2). Further, the driver-side rocker assembly 14 and the passenger-side rocker assembly 16 also absorb some (or all) the energy associated with the side pole impact 40, limiting (or preventing entirely) communication of energy to occupants and structures carried by the vehicle 10, e.g., the battery 22. To limit the weight of the vehicle body 12 without limiting strength of the vehicle body 12, and to provide additional bending stiffness and energy absorption, the driver-side rocker assembly 14 and the passenger-side rocker assembly 16 each include a respective energy absorbing device 100.

With reference to FIG. 2, the driver-side rocker assembly 14 is shown. The driver-side rocker assembly 14 includes a sill 42 and facia 44. The sill 42 is fixed to the vehicle body 12 and extends longitudinally along vehicle 10 (shown in FIG. 1). The facia 44 is laterally offset from the sill 42, the facia 44 and the sill 42 defining laterally between one another a rocker cavity 46. The rocker cavity 46 houses the energy absorbing device 100. The energy absorbing device 100 is supported within the rocker cavity 46. The passenger-side rocker assembly 16 (shown in FIG. 1) is similar to the driver-side rocker assembly 14, and is additionally located on laterally side of the protected space 32 opposite the driver-side rocker assembly 14.

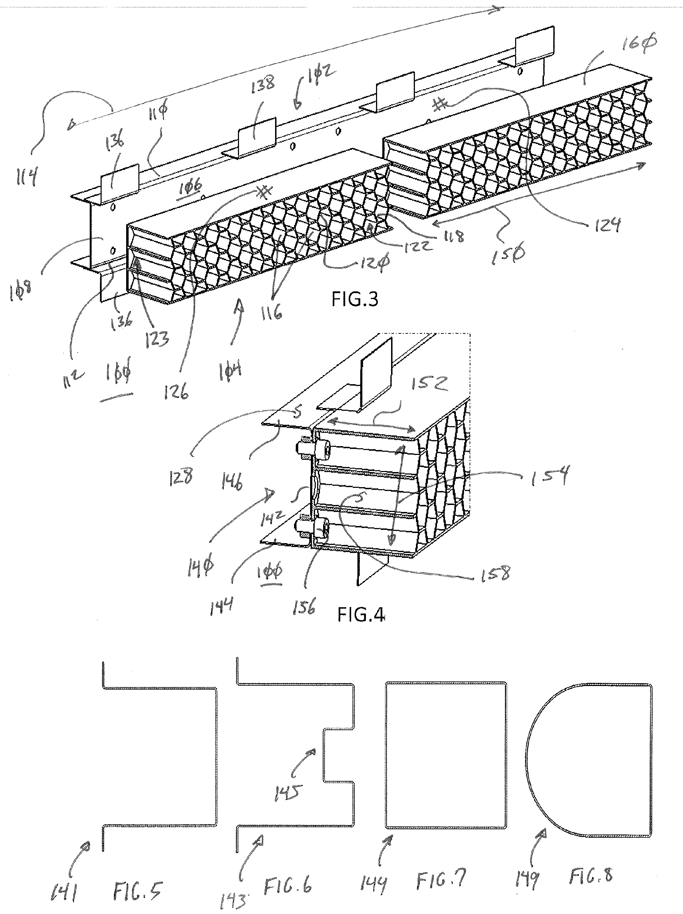

With reference to FIGS. 3 and 4, the energy absorbing device 100 is shown. The energy absorbing device 100 includes a composite or metallic component102 and a polymeric component 104. The composite or metallic component102 has three or more walls that form a component channel 106, e.g., a first wall 108, a second wall 110, and a third wall 112, and has a longitudinal length 114. The polymeric component 104 has a honeycomb structure 116 with two or more polymeric walls, e.g., a first polymeric wall 118 and one or more polymeric second wall 120, that define honeycomb tubes 122. The polymeric component 104 is supported within the component channel 106 with the honeycomb tubes 122 stacked transversely along the longitudinal length 114 of the component channel 106, ends 123 of the honeycomb tubes opposite the composite or metallic component102. The composite or metallic component102 has a bending stiffness 124 that is greater than a bending stiffness 126 of the honeycomb structure 116 to provide back support for progressive crushing of the honeycomb tubes 122 during the side pole impact 40(shown in FIG. 1) to the vehicle 10 (shown in FIG. 1).

In certain implementations the composite or metallic component102 provides bending stiffness sufficient for controlled crushing of the honeycomb tubes 122 of the honeycomb structure 116. For example, it is contemplated that composite or metallic component102 have bending stiffness between 500 and 7500 newtons/millimeter. This enables the composite or metallic component102 to provide bending stiffness to the energy absorbing device 100 in applications where rear support, e.g., such as that available from the sill 42 (shown in FIG. 2), is insufficient to provide bending stiffness sufficient for crushing of the honeycomb structure 116 during a side impact, e.g., during the side pole impact 40 (shown in FIG. 2). As a consequence, the energy absorbing device 100 allows for weight reduction of the driver side rocker assembly 14 (shown in FIG. 1) while providing similar (substantially equivalent or better) bending stiffness and/or energy absorption to a rocker assembly having a metallic construction. In certain implementations the weight reduction can be on the order of about 40% or more in comparison to a rocker assembly having metallic construction and otherwise dimensionally and functionally equivalent.

In the illustrated implementation the composite or metallic component102 is formed from a steel material 128 (shown in FIG. 4). The composite or metallic component102 also has a first fixation tab 136 and one or more second fixation tab 138 arranged along a longitudinal length 130 and between a first end 132 and second end 134 of the composite or metallic component102. The first fixation tab 136 is arranged adjacent to the first end 132 and is configured and adapted for connection to the sill 42 (shown in FIG. 2) of the driver-side rocker assembly 14 (shown in FIG. 1), the composite or metallic component102 thereby fixing the polymeric component 104 within the rocker cavity 46 (shown in FIG. 2). The second fixation tab 138 is similar to the first fixation tab 136 and is additionally offset from the first fixation tab 136 along the longitudinal length 114 of the composite or metallic component102. In the illustrated implementation of the composite or metallic component102 four (4) pairs of fixation tabs axially offset from one another along the longitudinal length 114 of the composite or metallic component102. This is for illustration purposes only and is non-limiting as the composite or metallic component102 can have fewer or more tabs than shown in the illustrated implementation, as suitable for an intended application.

As shown in FIG. 4, the composite or metallic component102 a u-shaped profile 140. The u-shaped profile has a planar base segment 142, a lower segment 144 connected to bottom edge of the planar base segment 142, and an upper segment 146 connect an upper edge of the planar base segment 142 on a side of the planar base segment 142 opposite the lower segment 144. It is contemplated that the u-shaped profile 140 cooperate with gauge of the steel material 128 of the composite or metallic component102 to provide the bending stiffness 124 (shown in FIG. 3) of the composite or metallic component102. The bending stiffness 124 is in turn selected, e.g., by choice of the gauge and/or height of the planar base segment 142 and span of the lower segment 144 and upper segment 146, to allow progressive crushing of the honeycomb tubes 122 of the polymeric component 104. In certain implementations the bending stiffness 124 is selected such that little reliance (and in certain implementations substantially no reliance) upon the sill 42 (shown in FIG. 2) is required to resist intrusion during a side impact, e.g., the side pole impact 40, due to the energy absorption provided by the polymeric component 104 and the bending stiffness 124 of the composite or metallic component102.

As shown in FIGS. 5-8, it is contemplated that composite or metallic component102 can have a profile differing from that shown in FIG. 3. For example, as shown in FIG. 5, the composite or metallic component102 can have a profile 141 with a cupped shape. As shown in FIG. 6, the composite or metallic component102 can have a profile 143 defining an interior pedestal 145. As shown in FIG. 7, the composite or metallic component102 can have a closed profile 147 defining planar faces. As shown in FIG. 8, the composite or metallic component102 can have a closed profile 149 defining an arcuate face. It is to be understood and appreciated the specific bending stiffness, e.g., stiffness per unit mass, of the composite or metallic component102 varies according the profile of the composite or metallic component102 and that different profile shapes have different advantages. For example, open profiles tend to have relatively low bending stiffness while providing ease of manufacturability. In contrast, closed profiles provide relatively high bending stiffness while adding operations to the manufacturing process.

It is contemplated that the planar base segment 142 seat the polymeric component 104. Fasteners 156 can fix the polymeric component to the composite or metallic component102. It is also contemplated that an adhesive can be employed to fix the polymeric component 104 to the composite or metallic component102. Use of the fasteners 156 enables the polymeric component 104 to be replaced without disturbing the fixation of the composite or metallic component102 to the vehicle body 12 (shown in FIG. 1). This can limit the cost associated with repairing the vehicle 10 (shown in FIG. 1) where the energy associated with the side pole impact 40(shown in FIG. 1) triggers a crush response from the polymeric component 104 without damaging the composite or metallic component102, such as during a slow-speed impact event. Adhesives in contrast can simplify assembly of the energy absorbing device 100 and/or reduce weight.

With continuing reference to FIG. 3, the longitudinal length 114 of the composite or metallic component102 is greater than a length 150 of the polymeric component 104. It is contemplated that the longitudinal length 114 of the composite or metallic component102 (and thereby the length of the energy absorbing device 100) be between about 300 millimeters and about 2 meters. In certain implementations the energy absorbing device 100 can have a depth 152 (shown in FIG. 4) that is between about 50 millimeters and about 150 millimeters. In further implementations the energy absorbing device 100 can have a height 154 (shown in FIG. 4) that is between about 50 millimeters and about 150 millimeters. Sizing the length 150, the depth 152, and the height 154 of the polymeric component 104 within these ranges allows the energy absorbing device 100 to fit within the limited packaging space defined within the rocker cavity 46 (shown in FIG. 2) of the driver-side rocker assembly 14. Sizing the length 150, the depth 152, and the height 154 within these ranges also allows the energy absorbing device 100 to fit within the packaging space defined within the confines of certain legacy vehicle rocker cavities, the energy absorbing device 100 thereby serving as substitute for energy absorbing devices formed from metallic materials, e.g., aluminum and aluminum alloy, with weight reduction on the order of 40% or more relative to energy absorbing devices having metallic construction without degradation of the vehicle body strength, and in certain implementations improving the strength of the vehicle body.

The polymeric component 104 is formed from a plastic material 158 (shown in FIG. 4), such as an e-coat compatible plastic material. Examples of suitable plastic materials include thermoplastics sold under the Noryl® tradename, such as unfilled Noryl® GTX 964, available from SABIC Global Technologies of Bergen op Zoom, the Netherlands. The plastic material 158 is distributed within the polymeric component 104 to form the honeycomb structure 116 such that the plurality of walls, e.g., the first polymeric wall 118 and the second polymeric wall 120, define the honeycomb tubes 122. The honeycomb tubes 122 are in turn oriented such that the respective bases of the honeycomb tubes 122 abut the planar base segment 142 (shown in FIG. 4) of the u-shaped profile 140 (shown in FIG. 4). As shown in FIG. 4 the honeycomb tubes 122 define hexagonal profiles along the depth 152 of the polymeric component 104. Hexagonal profiles allow for tuning the amount of energy absorbed through selection of the bending stiffness 126 of the honeycomb structure 116 and the selection of the bending stiffness 124 of the composite or metallic component102. Although hexagonal profiles are shown it is to be understood and appreciated that other profiles are possible and remain within the scope of the present disclosure.

It is contemplated that the energy absorbing device 100 can include two or more modular polymeric components. In this respect, as shown in FIG. 3, the polymeric component 104 is a first polymeric component 104 and the energy absorbing device 100 includes a second polymeric component 160. The second polymeric component 160 is supported in the component channel 106 of the composite or metallic component102 and abuts the first polymeric component 104. Implementations of the energy absorbing device 100 having two or more modular polymeric components can simplify the assembly of the energy absorbing device 100 by limiting lengths of the first polymeric component 104 and the second polymeric component 160, allowing for injection molding of the polymeric component 104 using standardized mold receptacles and avoiding the need of tooling that can accept relatively long molds. The limited lengths of the first polymeric component 104 and the second polymeric component 160 can also simplify the assembly of the energy absorbing device 100 as multiple short polymeric components can be more easily registered to the composite or metallic component102, such as when assembly is done with the composite or metallic component102 fixed to vehicle body 12 (shown in FIG. 1) in a vertical orientation with respect to gravity.

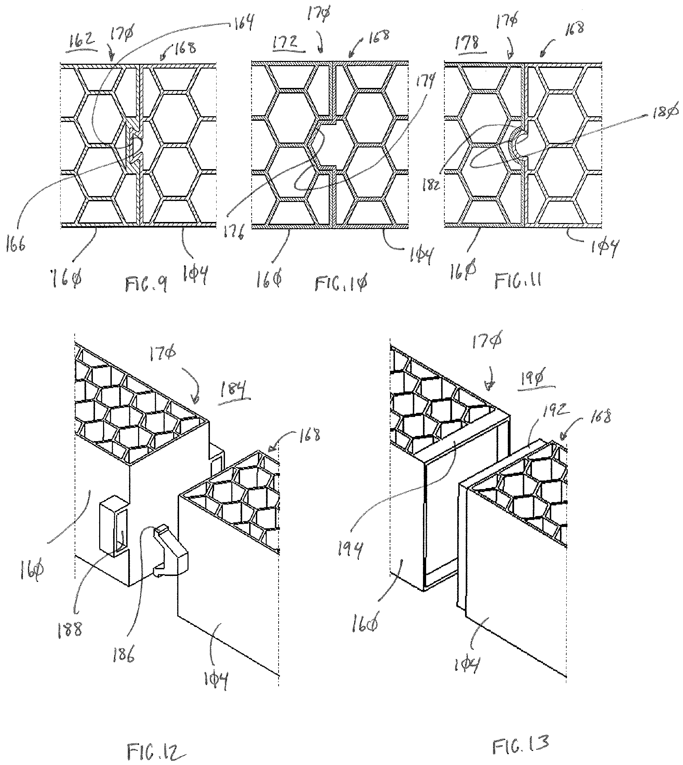

With reference to FIGS. 9-13, part-to-part interlocks for fixing the first polymeric component 104 to the second polymeric component 160 are shown. As shown in FIG. 9, certain implementations of the energy absorbing device 100 (shown in FIG. 1) can have a dovetail part-to-part interlock 162. The dovetail part-to-part interlock 162 includes a dovetail member 164 and a dovetail slot 166. The dovetail member 164 is formed on an end 168 of the first polymeric component 104 and the dovetail slot 166 is defined within an end 170 of the second polymeric component 160. During assembly it is contemplated that the second polymeric component 160 be fixed to the first polymeric component 104 by registering the first polymeric component 104 to the second polymeric component 160, slidably seating the dovetail member 164 into the dovetail slot 166 while registered, and thereafter fixing the first polymeric component 104 to the composite or metallic component102 (shown in FIG. 3). During fixation the dovetail part-to-part interlock 162 fixes the second polymeric component 160 in a cantilevered arrangement, allowing for fastening the second polymeric component 160 to the composite or metallic component102 while supported by the first polymeric component 104, e.g., while the composite or metallic component102 is oriented vertically relative to gravity, allowing for manual assembly of the energy absorbing device 100.

As shown in FIG. 10, in accordance with certain implementations, the energy absorbing device 100 (shown in FIG. 1) can have a half-hexagon part-to-part interlock 172. The half-hexagon part-to-part interlock 172 includes a half-hexagon member 174 and a half-hexagon slot 176. The half-hexagon member 174 is formed on the end 168 of the first polymeric component 104 and the half-hexagon slot 176 is defined within the end 170 of the second polymeric component 160. During assembly it is contemplated that the second polymeric component 160 be registered to the first polymeric component 104 by slidably seating the half-hexagon member 174 within the half-hexagon slot 176 and the first polymeric component 104 thereafter be fixed (e.g., fastened) to the composite or metallic component102 (shown in FIG. 3). This allows for coarse location of the second polymeric component 160 in relation to the first polymeric component 104, enabling fastening the second polymeric component 160 to the composite or metallic component102 while located and registered relative to the first polymeric component 104 while supported by a fixture or jig while the composite or metallic component102 is oriented vertically relative to gravity.

As shown in FIG. 11, it is contemplated that certain implementations of the energy absorbing device 100 (shown in FIG. 1) can have a semi-circle part-to-part interlock 178. The semi-circle part-to-part interlock 178 includes a semi-circle member 180 and a semi-circle slot 182. The semi-circle member 180 is formed on the end 168 of the first polymeric component 104 and the semi-circle slot 182 is defined within the end 170 of the second polymeric component 160. During assembly it is contemplated that the second polymeric component 160 be registered to the first polymeric component 104 by slidably seating the semi-circle member 180 within the semi-circle slot 182, and the second polymeric component 160 thereafter be fixed to the composite or metallic component102 (shown in FIG. 3). This allows for coarse location of the second polymeric component 160 with limited interruption of the pattern of the honeycomb structure 116, simplifying assembly of the energy absorbing device 100 while limiting the variation in crush resistance and bending stiffness along the longitudinal length of the energy absorbing device 100.

As shown in FIG. 12, it is also contemplated that, in accordance with certain implementations, the energy absorbing device 100 (shown in FIG. 1) can have snap part-to-part interlock 184. The snap part-to-part interlock 184 includes a snap member 186 and snap member seat 188. The snap member 186 is formed on the end 168 of the first polymeric component 104 and the snap member seat 188 is defined on the end 170 of the second polymeric component 160. It is contemplated that the snap member 186 and the snap member seat 188 be formed above or below the abutting ends of the first polymeric component 104 and the second polymeric component 160, limiting interruption of the pattern of honeycomb structure 116 and allowing for cantilevered support of the second polymeric component 160 by the first polymeric component 104 once the snap member 186 is received within the snap member seat 188. This allows for precise location of the second polymeric component 160 and support thereof during fixation to the composite or metallic component102 (shown in FIG. 3) for manual assembly of the energy absorbing device 100.

As shown in FIG. 13, in further implementations the energy absorbing device 100 (shown in FIG. 1) can have clip part-to-part interlock 190. The clip part-to-part interlock 190 includes a clip member 192 and clip member seat 194. The clip member 192 seats about the end 168 of the first polymeric component 104 and the clip member seat 194 seats about the end 170 of the second polymeric component 160. It is contemplated that the clip member 192 and the clip member seat 194 be formed as a belt of a band. The belt or band seats about the respective abutting ends of the first polymeric component 104 and the second polymeric component 160 without interruption of the pattern of honeycomb structure 116, fixes the first polymeric component 104 to the second polymeric component 160, and allows for cantilevered support of the second polymeric component 160 by the first polymeric component 104. In certain implementations the clip part-to-part interlock 190 allows for a crushed portion of either (or both) the first polymeric component 104 and the second polymeric component 160 to be removed, and a replacement portion secured therein, the bands or belts and the replacement polymeric component portion(s) forming a repair kit for the energy absorbing device 100.

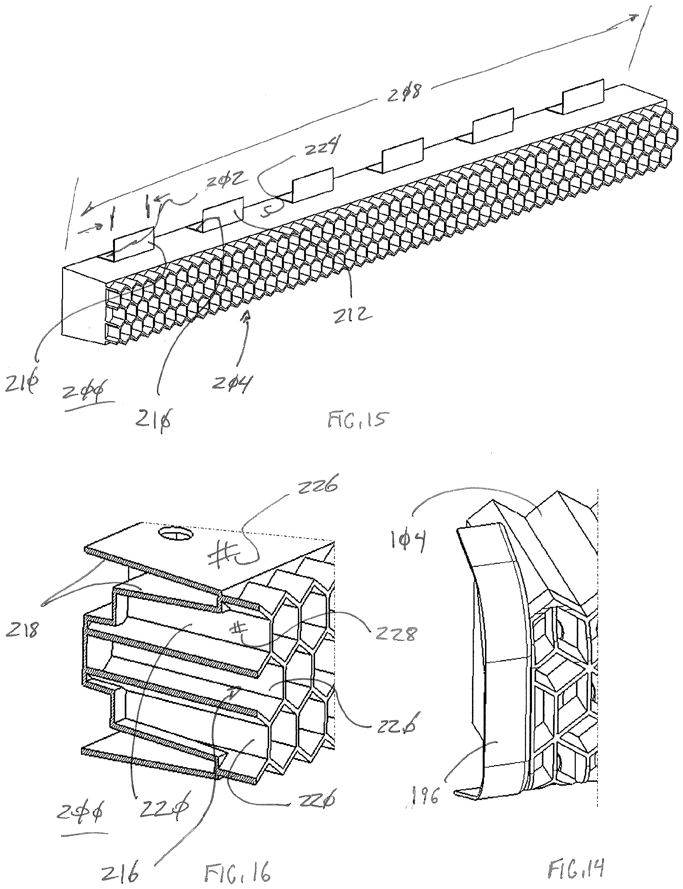

As shown in FIG. 14, it is also contemplated that, in accordance with certain implementations, the energy absorbing device 100 (shown in FIG. 1) can have a co-molded metal insert member 196. The co-molded metal insert member 196 is fixed the first polymeric component 104 and is arranged to interlock the second polymeric component 160 (shown in FIG. 3) to the first polymeric component 104. This simplifies the assembly of the energy absorbing device 100 as the second polymeric component 160 can be both registered by the co-molded metal insert member 196 and fixed to the first polymeric component 104 during assembly. Optionally, as shown in FIG. 4, the co-molded metal insert member 196 can support both the composite or metallic component102, the first polymeric component 104, and the second polymeric component 160 within the rocker cavity 46 (shown in FIG. 2), such as with the weld 54 (shown in FIG. 3), the fastener 56 (shown in FIG. 3), or the adhesive 58 (shown in FIG. 3).

With reference to FIGS. 15 and 16, an energy absorbing device 200 is shown. The energy absorbing device 200 is similar to the energy absorbing device 100 (shown in FIG. 1) and additionally includes both a composite or metallic component202 and a polymeric component 204.

As shown in FIG. 15, the composite or metallic component 202 has a length 206 that is smaller than a length 208 than that of the polymeric component 204. Further, the composite or metallic component 202 is a first composite or metallic component 202 and the energy absorbing device includes one or more second composite or metallic component 210, the second composite or metallic component 210 offset from the first composite or metallic component 210 along the length of the polymeric component 204. The first composite or metallic component 202 has a fixation tab 212 and the second composite or metallic component 210 has a fixation tab 214. The fixation tab 212 and the fixation tab 214 are configured to support the polymeric component 204 within the rocker cavity 46 (shown in FIG. 2), such as with a weld, fastener, or an adhesive. It is to be understood and appreciated that, while a specific number of fixation tabs are shown in the illustrated implementation, that the energy absorbing device 200 can have fewer or more fixation tabs, as suitable for an intended application.

As shown in FIG. 16, the polymeric component 204 includes a honeycomb structure 216 and a double-wall structure 218. The honeycomb structure 216 is connected to the double-wall structure 218 and is fixed to the first composite or metallic component202. The double-wall structure 218 in turn couples the honeycomb structure 216 to the first composite or metallic component202 and the second composite or metallic component210. It is contemplated that the double-wall structure 218 be co-molded with a plurality of tubes 220 forming the honeycomb structure 216 and defines the length 208 (shown in FIG. 11) of the energy absorbing device 200. In certain implementations the honeycomb structure 216 and the double-wall structure 218 are formed from a common polymeric material 224 (shown in FIG. 11), such as those described above. In accordance with certain implementations, the polymeric material 224 can be unfilled.

It is contemplated that the double-wall structure 218 have a bending stiffness 226 that is greater than a bending stiffness 228 of the honeycomb structure 216. This enables the double-wall structure 218 to provide bending stiffness to the energy absorbing device 200 where rear support, e.g., such as that available from the sill 42 (shown in FIG. 2), is not sufficient to provide adequate bending stiffness required for the honeycomb structure 216 to crush and absorb energy during an impact, e.g., during the side pole impact 40(shown in FIG. 1). As a consequence, the all-polymeric construction of the polymeric component 204 allows the energy absorbing device 200 to provide weight reduction of the driver side rocker assembly 14 (shown in FIG. 1) while providing similar strength to an energy absorbing structure having a metallic construction. In certain implementations the weight reduction can be on the order of about 30% or more in comparison to the energy absorbing structure having the metallic construction.

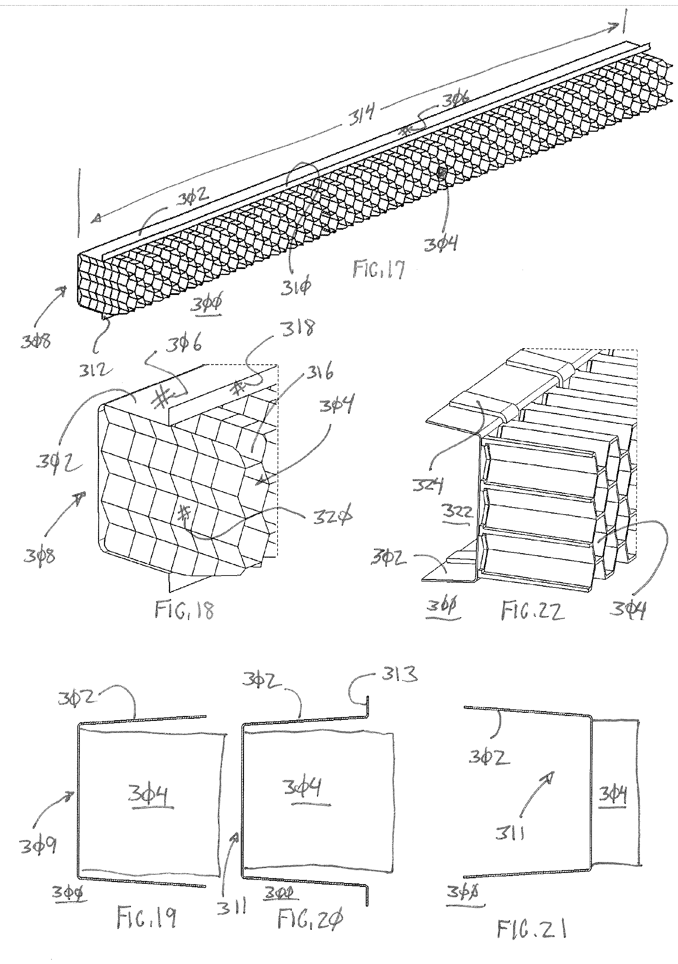

With reference to FIGS. 17 and 18, an energy absorbing device 300 is shown. The energy absorbing device 300 is similar to the energy absorbing device 100 (shown in FIG. 1) and additionally includes both a composite component 302 and a polymeric component 304.

As shown in FIG. 17, the composite component 302 is formed from a composite material 306, defines a w-shaped profile 308, and has a first fixation tab 310 and one or more second fixation tab 312. Examples of suitable composite materials include UD/woven materials as well as GF/CF resins, e.g., GTX830/GTX840. The second fixation tab 312 is offset from the first fixation tab 310 along a length 314 of the energy absorbing device 300. It is contemplated that the first fixation tab 310 and the second fixation tab 312 be configured to support the polymeric component 304 within the rocker cavity 46 (shown in FIG. 2), such as with a weld, fastener, or an adhesive. It is to be understood and appreciated that, while a specific number of fixation tabs are shown in the illustrated implementation, that the energy absorbing device 300 can have fewer or more fixation tabs, as suitable for an intended application.

As shown in FIG. 18, the polymeric component 304 includes a honeycomb structure 316. The honeycomb structure 316 is co-molded with the composite component 302 and disposed at least partially within the w-shaped profile 308 of the composite component 302, e.g., without fasteners and/or adhesives. It is contemplated that the w-shaped profile 308 and/or the composite material 306 forming the composite component 302 provide the composite component 302 with a composite component bending stiffness 318 that is greater than a honeycomb structure bending stiffness 320 of the honeycomb structure 316. This enables the composite component 302 to provide bending stiffness to the energy absorbing device 300 where rear support, e.g., such as that available from the sill 42 (shown in FIG. 2), is not sufficient to provide adequate bending stiffness required for the honeycomb structure 316 to crush and absorb energy during an impact, e.g., during the side pole impact 40 (shown in FIG. 2). As a consequence, the co-molded construction of the energy absorbing device 300 allows for weight reduction of the driver side rocker assembly 14 (shown in FIG. 1) while providing similar strength to an energy absorbing structure having a metallic construction. In certain implementations the weight reduction can be on the order of about 30% or more in comparison to the energy absorbing structure having the metallic construction.

As shown in FIGS. 19-22, it is contemplated that the energy absorbing device 300 can have a composite component 302 with a profile differing from that of the w-shaped profile 308 (shown in FIG. 17). For example, as shown in FIG. 19, the composite component 302 can have a profile 309 defining a u-shape with the polymeric component 304 seated therein. As shown in FIG. 20, the composite component 302 can have a profile 311 defining a u-shape with longitudinal flanges 313 and having the polymeric component 304 seated therein. As shown in FIG. 21 and 22, it is also contemplated that the composite component 302 can mount the polymeric component 304 on a side of the composite component 302 opposite a channel 322 defined composite component 302, such as with clips 324 for example.

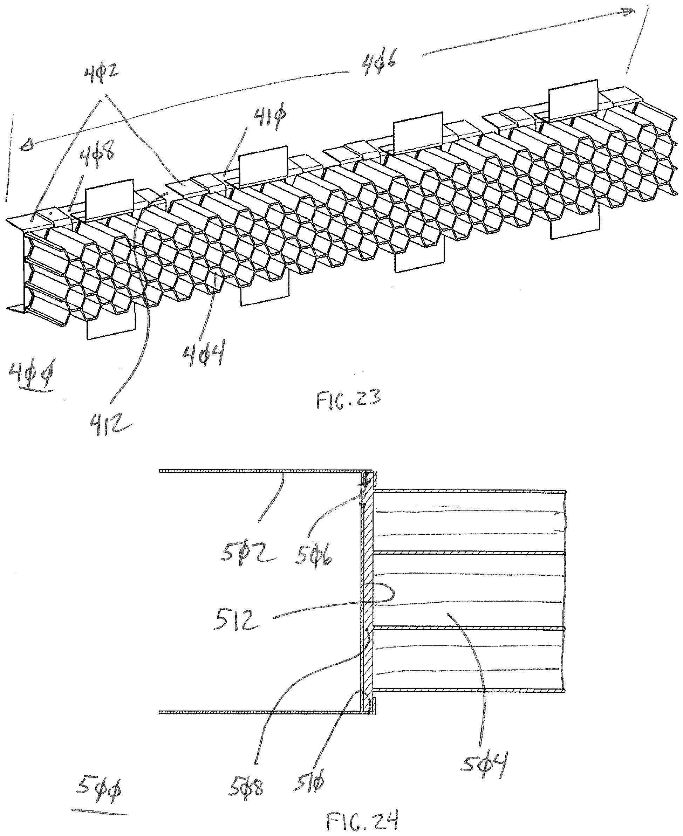

With reference to FIGS. 23 and 24, an energy absorbing device 400 and an energy absorbing device 500 are shown. As shown in FIG. 23, the energy absorbing device 400 is similar to the energy absorbing device 100 (shown in FIG. 1) and additionally includes both a composite or metallic component402 and a polymeric component 404. The composite or metallic component402 is discontinuous along its longitudinal length 406 and in this respect includes a first segment 408 and at least one second segment 410. The composite or metallic component402, e.g., the first segment 408 and the at least one second segment 410, define a slot 412 longitudinally between one another. The slot 412 extends along a length of the composite or metallic component 402. In this respect the polymeric component 404 has a longitudinal length 416 that is greater than a length of the composite or metallic component402, the polymeric component 404 coupling the first segment 408 with the second component 410. It is contemplated that the first segment 408 and the second segment 410 be spaced apart at locations along the sill 42 (shown in FIG. 2) where the sill 42 can provide suitable bending stiffness to allow crushing of the tubes 418 of the honeycomb structure 420 during an impact event, e.g., in response to the side pole impact 40 (shown in FIG. 2). This allows the energy absorbing device 400 to provide energy absorption in applications where rear support is intermittently available along the longitudinal length 416 of the polymeric component 404, the cooperation of the spacing between segments of the polymeric component 404 and the sill 42 allowing for further weight savings in comparison to energy absorbing devices of metallic construction.

As shown in FIG. 24, the energy absorbing device 500 is similar to the energy absorbing device 100 (shown in FIG. 1) and additionally include a composite or metallic component 502 and a polymeric component 504. The composite or metallic component 502 has a first flange 506 that extends longitudinally along at least a portion of the composite or metallic component 502 and a second flange 510 that extends longitudinally along at least a portion of the composite or metallic component 502. The first flange 506 and the second flange 508 define between one another a slot 512.

The first polymeric component 504 has a base 508 that extends longitudinally along at least a portion of the polymeric component 504. The base 508 spans the first flange 506 and the second flange 510 of the composite or metallic component 502 and is slidably received between first flange 506 and the second flange 510 within the slot 512. In this respect the first flange 506 and the second flange 510, as well as the base 508 of the polymeric component 504, contributes to the bending stiffness of the composite or metallic component 502 as well as fix the polymeric component 504 to the composite or metallic component 502. This limits the weight of the energy absorbing device 100. In certain implementations it also eliminates the need for fasteners and adhesive to fix the polymeric component 504 to the composite or metallic component 502.

The disclosure further encompasses the following implementations.
Implementation 1. An energy absorbing device comprises a composite or metallic component having greater than or equal to three walls forming a component channel with a longitudinal length and a polymeric component. The polymeric component has a honeycomb structure with a plurality of polymeric walls, the plurality of polymeric walls defining honeycomb tubes. The polymeric component is supported within the component channel with the honeycomb tubes stacked transversely along the longitudinal length of the component channel, ends of the honeycomb tubes opposing the composite or metal component. The polymeric component has a bending stiffness greater than a bending stiffness of the honeycomb structure.
Implementation 2. An energy absorbing device comprises a composite or metallic component having greater than or equal to three walls forming a component channel with a longitudinal length and a polymeric component. The polymeric component has a honeycomb structure with a plurality of polymeric walls, the plurality of polymeric walls defining honeycomb tubes. The polymeric component is supported within the component channel with the honeycomb tubes stacked transversely along the longitudinal length of the component channel, ends of the honeycomb tubes opposing the composite or metal component. The composite or metallic component has a bending stiffness greater than a bending stiffness of the honeycomb structure and optionally configured to provide back support for crushing of the honeycomb structure.
Implementation 3. An energy absorbing device includes a composite or metallic component having greater than or equal to three walls forming a component channel with a longitudinal length, and a polymeric component having a honeycomb structure with a plurality of polymeric walls, the plurality of polymeric walls defining honeycomb tubes. The polymeric component is supported within the component channel with the honeycomb tubes stacked transversely along the longitudinal length of the component channel, ends of the honeycomb tubes opposing the composite or metal component. The composite or metal component, or the polymeric component, has a bending stiffness greater than a bending stiffness of the honeycomb structure to provide back support for progressive crushing of the honeycomb tubes during a side pole impact to a vehicle.
Implementation 4. The device of any one or more of the implementations 1 to 3, wherein the composite or metallic component of the energy absorbing device has a length that is greater than a length of the polymeric component.
Implementation 5. The device of any one or more of the implementations 1 to 3, wherein the composite or metallic component of the energy absorbing device can has a length that is smaller than a length of the polymeric component.
Implementation 6. The device of any one or more of implementations 1 to 5, wherein the polymeric component is a first polymeric component and the energy absorbing device has a second polymeric component, the second polymeric component supported in the component channel and abutting the first polymeric component.
Implementation 7. The device of any one or more of implementations 1 to 4, wherein the certain implementations the energy absorbing device has a part-to-part interlock fixing the second polymeric component to the first polymeric component.
Implementation 8. The device of any one or more of the implementations 1 to 5, wherein the first polymeric component has one of a dovetail member, a half-hexagon member, and a semi-circle member on an end opposing the second polymeric component, the one of the dovetail member, the half-hexagon member, and the semi-circle member received in the second polymeric component.
Implementation 9. The device of implementation 8, wherein the first polymeric component the first polymeric component has one of a snap member, a clip member, and a co-molded metal insert member on an end opposing the second polymeric component. The one of the snap member, the clip member, and the co-molded metal insert member received in the second polymeric component.
Implementation 10. The device of any one or more of implementations 1 to 9, wherein the composite or metallic component has a fixation tab for fixation of the supported polymeric component within a vehicle rocker assembly.
Implementation 11. The device of any one or more of implementations 1 to 10, wherein the composite or metallic component is a first metal component with a fixation tab and the energy absorbing device can comprise a second metal component with a fixation tab, the second metal component offset from the first metal component along the length of the polymeric component.
Implementation 12. The device of any one or more of implementations 1 to 9, wherein the composite or metallic component is a first metal component having a first fixation tab and a second fixation tab, the second fixation tab offset from the first fixation tab along the length of the metal component.
Implementation 13. The device of any one or more of implementations 1 to 12, wherein the composite or metallic component is a composite component having a first fixation tab and a second fixation tab, the second fixation tab offset from the first fixation tab along the length of the composite component.
Implementation 14. The device of any one or more of the implementations 1 to 13 the composite or metallic component is a metal component having a u-shaped profile, wherein the polymeric component is fastened to the metal component.
Implementation 15. The device of any one or more of implementations 1 to 13, wherein the composite or metallic component is a composite component having a w-shaped profile, and wherein the polymeric component is co-molded to the composite metal component and at least in part within the w-shaped profile to form a unitary energy absorbing device.
Implementation 16. The device of any one or more of the implementations of 1 to 13, wherein the polymeric component has a double-wall structure co-molded with the plurality of tubes and fixed to the metal component, the double-wall structure defining the length of the energy absorbing device.
Implementation 17. The device of any one or more of implementations 1 to 13, wherein the composite or metallic component defines a slot, the polymeric component comprises a flange, and the flange of the polymeric component can be slidably received within the slot defined by the composite or metal component.
Implementation 18. The implementations of any one or more of the implementations of 1 to 17, wherein device has a length of between about 500 millimeters and about 1900 millimeters, a depth of between about 90 millimeters and about 140 millimeters, and a height of between about 70 millimeters and about 95 millimeters.
Implementation 19. A rocker assembly includes a sill having a sill bending stiffness, a facia connected to the sill and defining therebetween a rocker cavity, and an energy absorbing device as in any one or more of the preceding implementations supported within the rocker cavity and abutting the sill.
Implementation 20. The assembly of implementation 19, wherein the sill bending stiffness is greater than the bending stiffness of the composite or metal component.
Implementation 21. The assembly of implementation 19, wherein the sill bending stiffness is less than the bending stiffness of the a composite or metal component.
Implementation 22. A vehicle body is provided. The vehicle body includes a rocker assembly having a sill with a sill bending stiffness and an energy absorbing device according to any one or more of the preceding implementations abutting the sill. The rocker assembly is arranged laterally outboard of a protected space located within the vehicle body. A battery is arranged within the protected space, a drive train with a motor is in electrical communication with the battery. The sill bending stiffness is less than a bending stiffness required for crushing the honeycomb structure against the sill.
Implementation 23. The vehicle body of implementation 22, wherein the composite or metallic component has a length that is greater than a length of the polymeric component, the polymeric component can be a first polymeric component and the energy absorbing device further comprises a second polymeric component, the second polymeric component is supported in the component channel and abutting the first polymeric component, the composite or metallic component is a metal component having a u-shaped profile, and the first polymeric component and the second polymeric component can be fastened to the metal component.
Implementation 24. The vehicle body of implementation 22, wherein the composite or metallic component is a composite component having a w-shaped profile, and wherein the polymeric component is co-molded to the composite metal component and at least in part within the w-shaped profile to form a unitary energy absorbing device; wherein the composite component has a plurality of fixation tabs for fixation of the supported polymeric component within a vehicle rocker assembly.
Implementation 25. The vehicle body any one or more of implementations 22 to 24, wherein the composite or metallic component has a length that is smaller than a length of the polymeric component, the composite or metallic component can be is a first metal component with two fixation tabs, and the energy absorbing device can comprise a second metal component with two fixation tabs, the second metal component offset from the first metal component along the length of the polymeric component.

The energy absorbing devices disclosed herein offers efficient energy absorbing characteristics while being lightweight and less expensive than other all-metal structures. The energy absorbing device disclosed herein also offers an energy absorbing device having an assembly of polymeric components individually formed by processes such as injection molding, making the energy absorbing device less expensive than singular structures of comparable length. Additionally, the bending stiffness provided by the composite or metallic component complements the bending stiffness of other vehicle bodies, increasing resistance to intrusion into protected spaces within the vehicle while providing efficient energy absorption of characteristics with the polymeric component to absorb impact energy associated with side impact events.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to distinguish one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one implementation", "another implementation", "an implementation", and so forth, means that a particular element (e.g., feature, structure, and/or characteristic) described in connection with the implementation is included in at least one implementation described herein, and may or may not be present in other implementations. In addition, it is to be understood that the described elements may be combined in any suitable manner in the various implementations.

While particular implementations have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. An energy absorbing device, comprising:
a composite or metallic component having greater than or equal to three walls forming a component channel with a longitudinal length; and
a polymeric component having a honeycomb structure with a plurality of polymeric walls, the plurality of polymeric walls defining honeycomb tubes;
wherein the polymeric component is supported within the component channel with the honeycomb tubes stacked transversely along the longitudinal length of the component channel, ends of the honeycomb tubes opposing the composite or metal component;
wherein the composite or metal component, or the polymeric component, has a bending stiffness greater than a bending stiffness of the honeycomb structure and optionally configured to provide back support for crushing of the honeycomb structure.

2. The energy absorbing device as recited in claim 1, wherein the composite or metallic component has a length that is greater than a length of the polymeric component.

3. The energy absorbing device as recited in claim 1, wherein the composite or metallic component has a length that is smaller than a length of the polymeric component.

4. The energy absorbing device as recited in claims 1 to 3, wherein the polymeric component is a first polymeric component and further comprising a second polymeric component, the second polymeric component supported in the component channel and abutting the first polymeric component.

5. The energy absorbing device as recited in claim 4, further comprising a part-to-part interlock fixing the second polymeric component to the first polymeric component.

6. The energy absorbing device as recited in claims 1 to 5, wherein the composite or metallic component has a fixation tab for fixation of the polymeric component within a vehicle rocker assembly.

7. The energy absorbing device as recited in any of the preceding claims, wherein the composite or metallic component is a first metal component with a fixation tab, and further comprising a second metal component with a fixation tab, the second metal component offset from the first metal component along the length of the polymeric component.

8. The energy absorbing device as recited in any of the preceding claims, wherein the composite or metallic component is a composite component having a w-shaped profile or a u-shaped profile, and wherein the polymeric component is co-molded to the composite metal component and at least in part within the w-shaped profile to form a unitary energy absorbing device.

9. The energy absorbing device as recited in claims 1 to 7, wherein the polymeric component comprises a double-wall structure co-molded with the plurality of tubes and fixed to the metal component, the double-wall structure defining the length of the energy absorbing device.

10. The energy absorbing device as recited in claims 1 to 7, wherein the composite or metallic component has a first flange and a second flange defining therebetween a slot, wherein the polymeric component comprises a base, and wherein the base is slidably received within the slot between the first flange and the second flange to fix the polymeric component to composite or metal component.

11. The energy absorbing device as recited in any of the preceding claims, wherein the energy absorbing device has a length of between about 500 millimeters and about 1900 millimeters, wherein the energy absorbing device has a depth of between about 90 millimeters and about 140 millimeters, and wherein the energy absorbing device has a height of between about 70 millimeters and about 95 millimeters.

12. A rocker assembly, comprising:
a sill having a sill bending stiffness;
a facia connected to the sill and defining therebetween a rocker cavity; and
an energy absorbing device as recited in claim 1 supported within the rocker cavity and abutting the sill.

13. The rocker assembly as recited in claim 12, wherein the sill bending stiffness is greater than the bending stiffness of the a composite or metal component.

14. The rocker assembly as recited in claim 12, wherein the sill bending stiffness is greater than the bending stiffness of the a composite or metal component.

15. A vehicle body, comprising:
a rocker assembly comprising:
a sill having a sill bending stiffness; and
an energy absorbing device as recited in claim 1 abutting the sill;
wherein the rocker assembly is arranged laterally outboard of a protected space located within the vehicle body;
a battery arranged within the protected space; and
a drive train with a motor in electrical communication with the battery;
wherein the sill bending stiffness is less than a bending stiffness required for crushing the honeycomb structure against the sill.
